# EUROPÄISCHE PATENTSCHRIFT

(11) **EP 1 005 408 B1**
(45) Veröffentlichungstag und Bekanntmachung des Hinweises auf die Patenterteilung: **31.07.2002**
(21) Anmeldenummer: 98949928.0
(22) Anmeldetag: 21.08.1998
(51) Int. Cl.: B29C 45/16, B29C 45/00

(54) **VERFAHREN UND JUSTIERDÜSE ZUM SPRITZGIESSEN VON SPRITZGUSSTEILEN AUS PLASTIFIZIERBAREM MATERIAL**
METHOD AND ADJUSTABLE NOZZLE FOR INJECTION MOULDING PLASTIFIABLE PARTS
PROCEDE ET INJECTEUR AJUSTABLE POUR LE MOULAGE PAR INJECTION DE PIECES EN MATERIAU PLASTIFIABLE

(30) Priorität: 21.08.1997 DE 19736371; 27.02.1998 DE 19808145; 02.03.1998 US 76472
(43) Veröffentlichungstag der Anmeldung: 07.06.2000
(73) Patentinhaber: Structoform Spritzgiessen Anisotroper Strukturkomponenten Gmbh, 52070 Aachen (DE)
(72) Erfinder: BECKER, Heiner, D-52064 Aachen (DE)
(74) Vertreter: Castell, Klaus, Dr.
(86) Internationale Anmeldenummer: DE9802448
(87) Internationale Veröffentlichungsnummer: WO9910157

(56) Entgegenhaltungen:
- EP-A- 0 191 623
- EP-A- 0 424 624
- DE-A- 2 320 098
- DE-A- 4 124 342
- GB-A- 2 299 780
- "Im test: Gegentakt-Spritzgiessen von Airbus-Fensterrahmen" KUNSTSTOFFE, Bd. 82, Nr. 6, Juni 1992, Seiten 485-486, XP000281326

## Beschreibung

Die Erfindung betrifft ein Verfahren zum Spritzgießen von Spritzgußteilen aus plastifizierbarem Material, bei dem ein erstes plastifiziertes Material durch eine erste Öffnung in eine Spritzgießform eingespritzt wird und sich am Rand der Form verfestigt und anschließend ein zweites, von dem ersten sich unterscheidendes plastifiziertes Material in die Spritzgießform eingespritzt wird.

Ferner betrifft die Erfindung eine Justierdüse für eine Spritzgußvorrichtung.

Derartige Verfahren werden als Sandwich-Verfahren oder als Mono-Sandwich-Verfahren bezeichnet. Sie führen bei dem Spritzgußteil zu einer äußeren Hülle und einem Kern, wobei vorzugsweise Hülle und Kern aus unterschiedlichen Materialien gefertigt sind. Die Festigkeit derartiger Materialien wird durch die Auswahl der verwendeten Materialien und deren Stärke beeinflußt.

Die EP-A- 0 191 623 beschreibt ein Verfahren zum Spritzgießen von Spritzgußteilen aus plastifizierbarem Material, bei welchem ein erstes plastifizierbares Material in eine Spritzgießform eingespritzt wird und sich am Rand der Form verfestigt, und anschließend ein zweites, sich von dem ersten unterscheidendes plastifiziertes Material in die Spritzgießform eingespritzt wird. Nach dem Einspritzen wird mittels einer periodischen Druckschwankung weiteres plastifiziertes Material eingefügt und so die Packungsdichte erhöht.

Darüber hinaus ist aus der EP-A-0 424 624 eine gattungsgemäße Anordnung bekannt, nach welcher jeweils zwei Eingänge in einen Hohlraum einer Spritzgießform über gegenläufige Rückschlagventile miteinander verbunden sind. Diese Rückschlagventile sind ebenfalls in der Spritzgießform angeordnet und mit dem Eingang in die Spritzgießform, an welchem dann eine Düse eines Extruders ansetzen kann, verbunden.

Der Erfindung liegt die Aufgabe zugrunde, die Festigkeit der mit dem bekannten Verfahren herstellbaren Spritzgußteile zu erhöhen.

Diese Aufgabe wird dadurch gelöst, daß nur das zweite plastifizierte Material während des Erstarrens derart bewegt wird, daß es durch eine zweite Öffnung überströmt.

Des weiteren wird diese Aufgabe durch die Justierdüse gemäß Patentanspruch 12 und durch die Justierdüse gemäß Patentanspruch 14 gelöst.

Zweckmäßige Weiterbildugen der Erfindung sind Gegenstand der betreffenden abhängigen Ansprüche.

Das Bewegen des Materials führt einerseits zu einer erhöhten Festigkeit und andererseits zu einer guten Verbindung zwischen erstem und zweitem Material. Hierbei versteht es sich, daß das erste und zweite Material auch bis auf die verwendete Temperatur oder sonstige Parameter identisch gewählt werden können. Durch die Erfindung lassen sich Spritzgußteile mit völlig neuen und neuartigen Eigenschaften herstellen.

Vorteilhaft ist es, wenn das zweite plastifizierte Material von mindestens einer zweiten Öffnung in die Spritzgießform eingespritzt wird. Das Einspritzen des Materials von verschiedenen Seiten bringt den Vorteil, daß die zum Einspritzen der Materialien verwendeten Kolben oder Schnecken gegeneinander getaktet werden können, so daß im zweiten plastifizierten Material eine Bewegung entsteht.

Eine derartige Kolbenanordnung erlaubt es auch, das zweite plastifizierte Material nur in einer Richtung zu bewegen. Eine Bewegung des zweiten plastifizierten Materials in einer Richtung kann jedoch auch mittels eines Kolbens und einer Überströmöffnung in der Spritzgießform erzielt werden. Sofern die Spritzgießform zwei Öffnungen hat, können diese Öffnungen auch über einen Bypaß miteinander verbunden werden, so daß mit einer passenden Ventiltechnik das zweite plastifizierte Material im Kreis bewegt werden kann. Die Bewegung kann einerseits durch die Zuführschnecken oder -kolben erzeugt werden. Andererseits kann jedoch auch im Bypaß eine Pumpe vorgesehen sein.

Eine bevorzugte Ausführungsform sieht vor, daß die Bewegung durch Oszillation des Einspritzkolbens oder der Einspritzkolben erzeugt wird. Die Oszillation bewirkt keine starke Masseverschiebung und hat jedoch den Vorteil, daß das plastifizierte Material ausgerichtet wird.

Eine Variante sieht vor, daß die Bewegung durch Ultraschall erzeugt wird. Auch mit Ultraschall kann in der Spritzgießform eine Bewegung erzeugt werden, die ausschließlich das zweite plastifizierte Material bewegt.

Eine weitere Variante sieht vor, daß ein elektromagnetisches Feld auf das zweite plastifizierte Material einwirkt. Auch dadurch ist eine Ausrichtung des plastifizierten Materials zu erreichen.

Bei speziellen Anwendungsgebieten ist es möglich, die Bewegung durch Eindüsen eines Fluids zu erzeugen. Unter Fluid wird einerseits ein Gas verstanden, andererseits kann das Fluid jedoch auch eine beliebige Flüssigkeit sein, die in das zweite plastifizierte Material eingedüst wird. Hierbei wird das Fluid zum Schieben bzw. Nachschieben des Materials genutzt. Hierbei kann das Fluid dazu genutzt werden, in dem Spritzgußteil einen oder mehrere Hohlräume zu erzeugen. Gleichwohl bleibt es bei diesen Vorgängen vorteilhafterweise passiv, reagiert also mit der Schmelze nur unwesentlich.

Eine weitere Variante sieht vor, daß die Bewegung durch eine Schmelzepumpe erzeugt wird. Beispielsweise durch eine Zahnradpumpe, die anstelle eines Kolbens eingesetzt wird, kann eine Bewegung in eine Richtung oder eine Hinund Herbewegung erzeugt werden.

Ein Ausführungsbeispiel der Erfindung sieht vor, daß das zweite plastifizierte Material von zwei Stellen zumindest zum Teil gleichzeitig in die Spritzgießform eingespritzt wird. Das Material trifft dann an einer Stelle aufeinander und es entsteht dort eine Naht, die durch die Bewegung besonders verfestigt werden kann bzw. verfestigt wird. Dieser Nahtbereich führt zu einer besonders hohen Festigkeit und es wird daher vorgeschlagen, diesen Nahtbereich in besonders beanspruchte Bereiche zu legen. Der Nahtbereich, der früher in weniger beanspruchte Bereiche gelegt wurde, da er nur eine geringe Festigkeit aufweist, hat durch die Bewegung des plastifizierten Materials während des Erstarrens eine etwa um den Faktor 4 erhöhte Festigkeit. Dieser Vorteil ist nicht auf das Sandwich-Verfahren beschränkt, sondern kann allgemein bei Spritzgießverfahren genutzt werden.

Beispielsweise zum Einbringen elektronischer Schaltungen in ein Spritzgußteil wird vorgeschlagen, daß vor oder nach dem Einspritzen des ersten plastifizierten Materials eine Folie oder ein Verstärkungsgewebe in die Spritzgießform eingelegt wird. Die Folie kann eine elektrische Schaltung aufweisen und das Verstärkungsgewebe kann einer Festigkeitserhöhung dienen. Die eingelegte Folie kann aus unterschiedlichen Materialien bestehen. Eine Dekorfolie dient optischen Zwecken. Die Folie kann jedoch auch bestimmte chemische und/oder physikalische und/oder elektrische und/oder thermische und/oder optische und/oder mechanische Eigenschaften haben, die der spezielle Anwendungsfall erfordert. Ein breites Anwendungsgebiet erschließen Folien, die auf fotooptische oder galvanische Weise erzeugte elektrische oder elektronische Schaltungen aufweisen. Als Verstärkungsgewebe kann insbesondere ein Glasfaser-, ein Kohlefaser und/oder ein Eigenfasergewebe dienen, wobei das Eigenfasergewebe Fasern aus einem in dem ersten und/oder zweiten plastifizierten Material enthaltenen Material umfaßt. Die Verwendung derartiger Verstärkungsgewebe bzw. Folien ist auch für sich genommen vorteilhaft, um einerseits gewünschte Eigenschaften, wie Dekor, Festigkeit oder Leitfähigkeit, und anderseits die beim Spritzgießen erreichbaren hohen Fertigungsraten zu ermöglichen.

Hierbei kann insbesondere das Eigenfasergewebe bereits gerichtet eingebracht werden. Darüber hinaus kann das Verfahren derart betrieben werden, daß zunächst flüssige Schmelze eingebracht wird, die das Gewebe durchdringt. Anschließend wird das zweite Material, beispielsweise eine mit Eigenfasern durchsetzte Schmelze, eingebracht und nach Bedarf in erfindungsgemäßer Weise bewegt. Hierdurch kann eine Naht in gewünschter Weise verstärkt werden.

Die vorbeschriebene Anwendung kann auch zusammen mit dem vorbeschriebenen Einsatz eines Fluids Verwendung finden.

Eine in vielen Fällen vorteilhafte Variante des Verfahrens sieht vor, daß das erste Material nur einen Teil der Wandung der Spritzgießform bedeckt. Dies führt dazu, daß das Spritzgußteil eine Außenwandung aus zwei verschiedenen Materialien hat, die beispielsweise in unterschiedlichen Farben ausgeführt sein können. Bei diesem Verfahren wird vorzugsweise ein Absatz in der Form genutzt, um einen definierten Übergang zwischen den beiden Materialien zu erzielen.

Eine Alternative dazu sieht vor, daß nach teilweisem Befüllen der Spritzgießform mit einem ersten Material mittels eines Schiebers ein weiterer Bereich der Spritzgießform geöffnet wird, der anschließend mit dem zweiten Material gefüllt wird. Auch der Schieber führt zu einem definierten Übergang vom ersten zum zweiten Material. Vorzugsweise wird in Abhängigkeit vom Einspritzvorgang - d.h. beispielsweise von der Wegstrecke, die eine Zuführschnecke zurückgelegt hat, von der für den Spritzvorgang durchlaufenden Zeit bzw. von einem an der Einspritzvorrichtung oder im Werkzeug ermittelten Druck - der Schieber aktiviert.

Eine Modifikation des erfindungsgemäßen Verfahrens sieht vor, daß vor dem ersten plastifizierbaren Material mindestens ein weiteres plastifizierbares Material eingespritzt wird. Dies führt zu einem Aufbau des Spritzgußteils aus einzelnen konzentrischen Schichten, wobei je nach Verfahrensführung das plastifizierte Material bestimmter Schichten bewegt werden kann. Bewegte und unbewegte Schichten können abgewechselt werden und es können nacheinander bewegte Schichten baumkuchenartig eingebracht werden, um ein besonders festes Spritzgußteil zu erzeugen.

Vorteilhaft ist es, wenn das zweite plastifizierte Material einen Füllstoff aufweist. Als Füllstoff sind Fasern, Partikel, Ruß und Metalle möglich. Als plastifiziertes Material kommt neben Kunststoffen auch plastifizierbare Keramik und plastifizierbares Pulvermetall in Frage.

Die nach den beschriebenen Verfahren hergestellten Spritzgußteile eignen sich wegen ihrer hohen Festigkeit als Stabilisator, als Strebe- oder Gelenkwelle und als Verstärkungshülse (Insert) für unterschiedlichste Zwecke. Die Teile sind sowohl besonders auf Zugdruck als auch auf Biegung gut beanspruchbar. Die Verwendung unterschiedlicher Materialien, insbesondere als erstes plastifiziertes Material, erschließt die Herstellung von Deckeln oder Gehäusen mit Dichtung, Laufrollen mit Nabe und Lauffläche, Schwingungsabsorberfüßen, Stoßdämpfern, Kühlwasserrohren mit harten und weichen Bereichen, Filterelemente, Kupplungspedale oder sonstige Pedalen.

Gerade die Verwendung von thermoplastischem Gummi als plastifizierbares Material ermöglicht auch die Herstellung von Scharnieren, wobei zwei oder mehrere feste Kunststoffmaterialien durch ein Gummistück miteinander verbundien sind. Bei einem bevorzugten Ausführungsbeispiel werden von zwei Seiten als erstes plastifiziertes Material härtere, thermoplastische Kunststoffe eingespritzt, die zwei beabstandete Körper bilden. Anschließend wird der Abstand zwischen den Körpern und ggf. eine Innenseite mit Gummimaterial ausgefüllt, so daß ein Scharnier zwischen zwei Kunststoffteilen entsteht.

Bezüglich der Justierdüse hat sich in der Praxis herausgestellt, daß die Positionierung der Justierdüse zwischen Spritzgießform und Spritzgußvorrichtung häufig sehr zeitaufwendig ist.

Üblicherweise ist die Justierdüse in die Fläche an der Spritzgußvorrichtung eingeschraubt und beim Einschrauben der Justierdüse verändert sich der Abstand des Düsenendes zur Spritzgußvorrichtung. Dieses Problem wird dadurch eleminiert, daß ein an der Justierdüse befestigter Flansch oder ein über die Justierdüse stülpbarer Flansch mit der Spritzgußvorrichtung fest verbunden ist, so daß die Justierdüse in einer beliebigen um ihre Achse gedrehten Position an der Spritzgußvorrichtung befestigbar ist. Insbesondere wenn die Justierdüse mehrere Öffnungen hat, die abwechselnd genutzt werden sollen, ist die beschriebene Vorrichtung von besonderem Vorteil.

Des weiteren ist vorgesehen, daß die Justierdüse verschiedene Kanäle aufweist und in einem Block beweglich ist, so daß ein Kanal der Justierdüse mit einem Kanal im Block fluchtet.

Ein Heißkanalblock erlaubt es, entweder von der Justierdüse plastifiziertes Material durch den Heißkanalblock zur Spritzgießform oder zu einem Extruder zu leiten oder die Zuleitung an einer Wandung des Blocks enden zu lassen und durch einen weiteren Kanal der Justierdüse eine Durchströmung des Blocks von diesem Extruder aus zu ermöglichen. Ebenso können verschiedene Extruder auf diese Weise auf eine Einspritzöffnung der Spritzgießform geschaltet werden.

Vorzugsweilse wird die Spritzgußform mit einer niedrig schmelzenden Metallegierung temperiert.

Eine Justierdüse für eine Spritzgußvorrichtung weist zwei miteinander verbundenen Ausgängen auf, die jeweils mit einem Rückschlagventil versehen sind, wobei die Rückschlagventile gegenläufig angeordnet sind. Es sind aber auch Düsen mit mehreren Kanälen denkbar, wobei in diesem Fall wenigstens eine der Düsen ein Ventil, vorzugsweise ein Rückschlagventil, aufweisen soll. Im übrigen können die Rückschlagventile geeignet gewählt werden.

Durch eine niedrig schmelzende Metallegierung kann eine schnelle Werkzeugtemperierung (dynamisch) erreicht werden. Insbesondere eignet sich die Verwendung einer derartigen Metalllegierung für dünnwandige Bereiche, so daß sich hierdurch verhältnismäßig komplexe Spritzgußteile in sehr guter Qualität herstellen lassen. Die Verwendung einer niedrig schmelzenden Metalllegierung ist auch unabhängig von den übrigen vorgenannten Merkmalen zur Temperierung einer Spritzgußform vorteilhaft.

Eine Vorrichtung zur Durchführung des erfindungsgemäßen Verfahrens sowie eine Justierdüse sind als Ausführungsbeispiel in der Zeichnung dargestellt und werden im folgenden näher erläutert.

Es zeigt,
- Figur 1: eine schematische Darstellung einer Spritzgießvorrichtung für das erfindungsgemäße Verfahren,
- Figur 2: die Befestigung einer Justierdüse an einer Spritzgußvorrichtung und
- Figur 3: eine schematische Darstellung zur Durchströmung einer Spritzgießform,
- Figur 4: eine perspektivische Ansicht eines Heißkanalblocks mit Justierdüse und
- Figur 5: einen Schnitt durch die Justierdüse nach Figur 4.

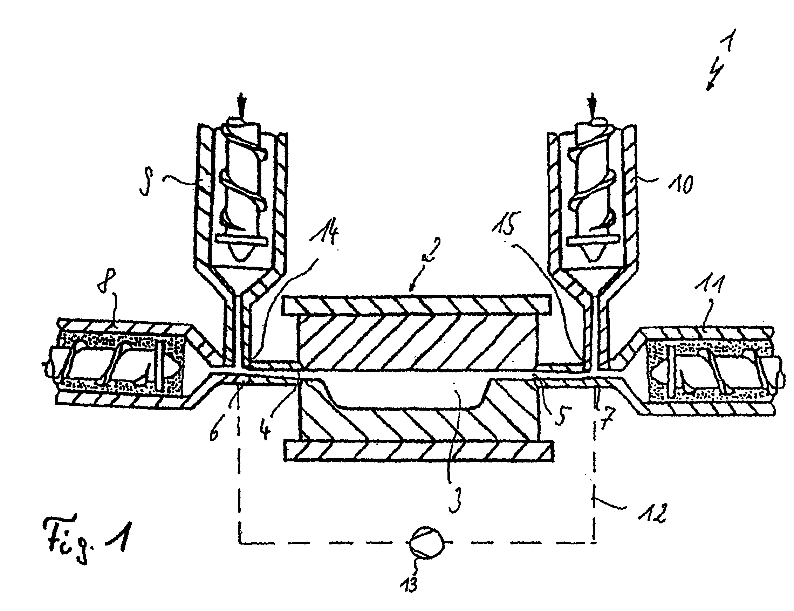

Die in Figur 1 dargestellte Spritzgießvorrichtung 1 besteht aus einer Spritzgießform 2 mit einem Formnest 3, das zwei Öffnungen 4 und 5 aufweist. Diese Öffnungen 4 und 5 sind über sich verzweigende Leitungen 6 und 7 jeweils mit zwei Zuführvorrichtungen 8, 9 und 10, 11 für plastifiziertes Material verbunden. Die sich verzweigenden T-Stücke 14, 15 erlauben es abwechselnd, jeweils nur eine der Zuführvorrichtungen 8 oder 9 bzw. 10 oder 11 mit dem Formnest 3 zu verbinden.

Dadurch ist es möglich, zunächst von zwei Seiten plastifiziertes Material in das Formnest 3 aus den Zuführaggregaten 8 und 11 zuzuführen und anschließend ein anderes plastifiziertes Material durch die Zuführvorrichtungen 9 und 10 in das Formnest 3 zu leiten.

Außerdem kann zunächst aus den Zuführvorrichtungen 9 und 10 plastifiziertes Material in die Zuführvorrichtungen 8 und 11 gedrückt werden und anschließend wird zunächst aus einer der Zuführvorrichtungen 8 geschichtetes Material in das Formnest geschoben und dann aus der anderen Vorrichtung 11 geschichtetes Material in das Formnest geschoben. Dadurch entsteht eine vierfache Schichtung im Formnest.

Darüber hinaus kann das in das Formnest 3 durch eine Öffnung 4 eingeführte Material überströmen und durch die weitere Öffnung 5 in ein anderes Zuführaggregat überströmen oder es kann in einen Bypass 12 geschoben werden. Darüber hinaus erlaubt die Pumpe 13 im Bypass 12 eine Kreislaufströmung durch das Formnest 3.

Je nach Ventilstellung an den Stellen 14 und 15 können somit die eingangs beschriebenen Verfahren realisiert werden.

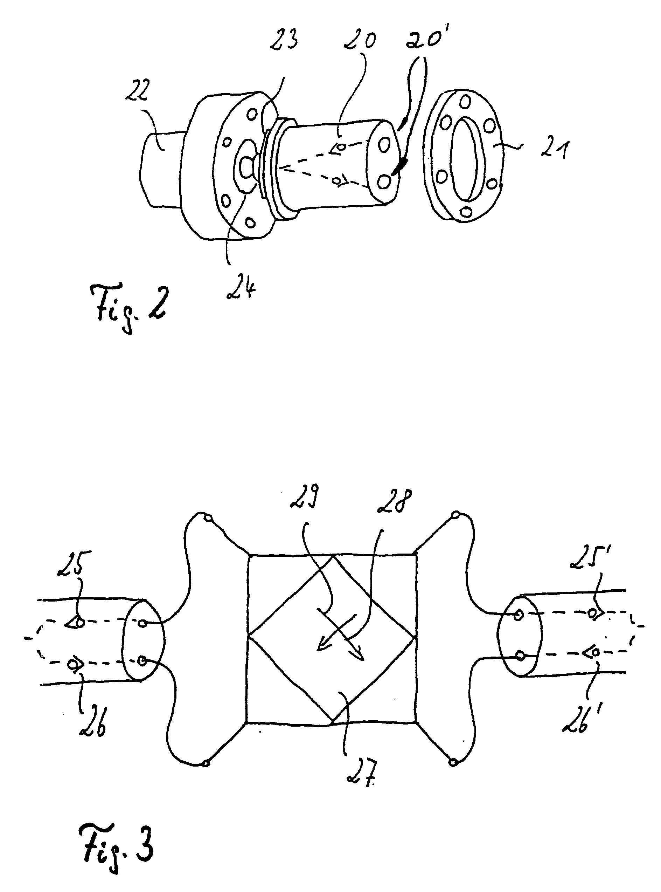

Die Figur 2 zeigt eine Justierdüse 20, die mit einem Flansch 21 an eine Spritzgußvorrichtung 22 anschraubbar ist. Ein gestufter Absatz 23 an der Justierdüse 20 dient dabei dem passgenauen Einsetzen der Justierdüse 20 in einen entgegengesetzt gestuften Absatz 24 an der Spritzgußvorrichtung 22. Nach Ansetzen der Justierdüse 20 an der Spritzgußvorrichtung 22 wird diese durch Überstülpen des Flansches 21 und Anschrauben des Flansches 21 an der Spritzgußvorrichtung 22 befestigt.

Die Justierdüse 20 weist einen Eingang an der Seite der Spritzgußvorrichtung 22 sowie zwei Ausgänge 20' an der Werkzeugseite auf. Innerhalb der Justierdüse 20 sind gegenläufige Rückschlagventile 25, 26 bzw. 25', 26' vorgesehen.

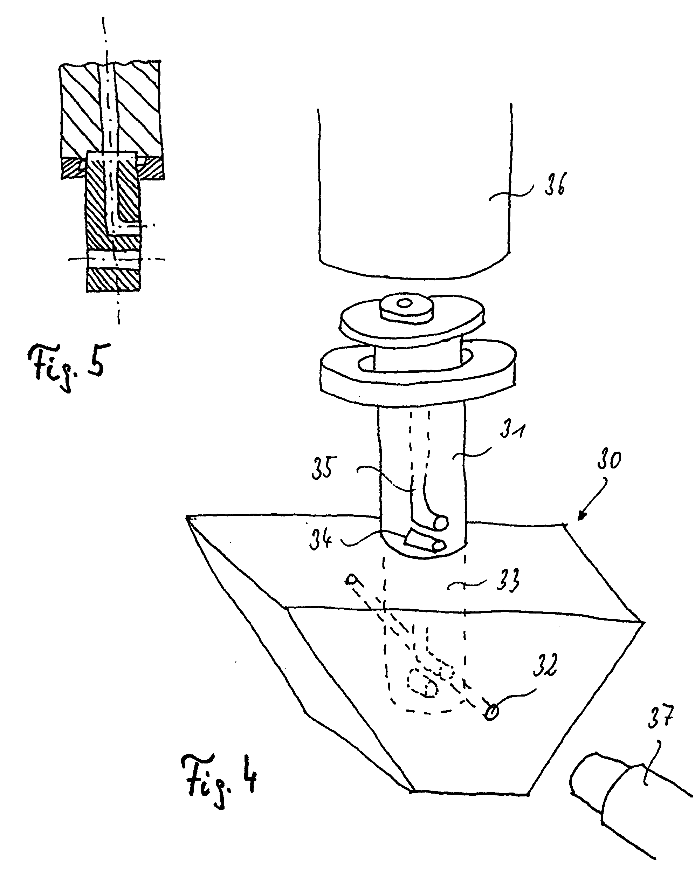

Die Figur 3 zeigt eine Möglichkeit des Einsatzes einer derartigen Justierdüse. Dies erlaubt es, das Formteil 27 entweder in Richtung des Pfeiles 28 oder in Richtung des Pfeiles 29 zu durchströmen. Auf diese Weise lassen sich ohne Weiteres verschieden gerichtete Schichtungen realisieren. Es versteht sich, daß auch andere Strömungswege durch eine derartige Düse 20 angesteuert werden können.

Der in Figur 4 gezeigte Heißkanalblock 30 arbeitet mit einer speziellen Justierdüse 31 zusammen. Der Heizkanalblock hat einen durchgehenden Kanal 32 und eine den Kanal 32 schneidende zentrale runde Öffnung 33, in den der Düsenkopf der Justierdüse 31 einschiebbar ist. Dieser Düsenkopf hat eine quer zur Justierdüsenachse sich erstreckende Bohrung 34, die im Durchmesser dem Kanal 32 entspricht und durch Einsenken der Justierdüse in die Öfffnung 33 des Heißkanalblocks 30 mit dem Kanal 32 fluchtet.

Oberhalb der Bohrung 34 ist in der Justierdüse 31 eine L-förmige Bohrung 35 vorgesehen, die ebenfalls mit dem Kanal 32 zum Fluchten zu bringen ist und dann den Justierdüsenkörper 36 mit dem Kanal 32 verbindet, um plastifiziertes Material von Justierdüsenkörper 36 durch den L-förmigen Kanal 35 in den Kanal 32 zu fördern.

Der Kanal 32 steht schließlich mit einer Zuführung 37 mit dem Formnest 3 in Verbindung.

Andererseits kann die Justierdüse auch in anderer Richtung verwendet werden, so daß der L-förmige Kanal 35 Schmelze von einem Nebenextruder zu einem Hauptextruder fördern kann, von welchem die Schmelze dann, durch den Kanal 35 zurück, in den Kanal 32 und in das Formnest 3 befördert wird.

Die vorbeschriebenen Düsen 20 und 31 gewährleisten durch ihren kompakten Aufbau eine besonders einfache Umsetzung der vorbeschriebenen Verfahren. Sie können ohne Weiteres anstelle bestehender eingängiger Düsen auf Spritzgußvorrichtungen, wie Extruder bzw. Spritzkolbenmaschinen, aufgesetzt werden, so daß letztere ohne große bauliche Maßnahmen für eine Anwendung des erfindungsgemäßen Verfahrens umgerüstet werden können.

Die Justierdüsen 20 und 31 erlauben somit auf einfache Weise verschiedene Strömungswege lediglich durch Steuerung der Spritzgußvorrichtung durchlaufen zu lassen.

## Patentansprüche

1. Verfahren zum Spritzgießen von Spritzgußteilen aus plastifizierbarem Material, bei dem ein erstes plastifiziertes Material durch eine erste Öffnung (4,5) in eine Spritzgießform (2) eingespritzt wird und sich am Rand der Form verfestigt und anschließend ein zweites, sich von dem ersten unterscheidendes plastifiziertes Material in die Spritzgießform (2) eingespritzt wird, ***dadurch gekennzeichnet, daß*** nur das zweite plastifizierte Material während des Erstarrens derart bewegt wird, daß es durch eine zweite Öffnung (5,4) überströmt.

2. Verfahren nach Anspruch 1, ***dadurch gekennzeichnet, daß*** das zweite plastifizierte Material nur in einer Richtung bewegt wird.

3. Verfahren nach einem der vorhergehenden Ansprüche, ***dadurch gekennzeichnet, daß*** die Bewegung durch Ultraschall erzeugt wird.

4. Verfahren nach einem der vorhergehenden Ansprüche, ***dadurch gekennzeichnet, daß*** ein elektromagnetisches Feld auf das zweite plastifizierte Material einwirkt.

5. Verfahren nach einem der vorhergehenden Ansprüche, ***dadurch gekennzeichnet, daß*** die Bewegung durch eine Schmelzepumpe (13) erzeugt wird.

6. Verfahren nach einem der vorhergehenden Ansprüche, ***dadurch gekennzeichnet, daß*** das zweite plastifizierte Material von zwei Stellen (4,5) zumindest zum Teil gleichzeitig in die Spritzgießform (2) eingespritzt wird.

7. Verfahren nach einem der vorhergehenden Ansprüche, ***dadurch gekennzeichnet, daß*** vor oder nach dem Einspritzen des plastifizierten Materials eine Folie oder ein Verstärkungsgewebe in die Spritzgießform (2) eingelegt wird.

8. Verfahren nach einem der vorhergehenden Ansprüche, ***dadurch gekennzeichnet, daß*** das erste Material nur einen Teil der Wandung der Spritzgießform (2) bedeckt.

9. Verfahren nach einem der vorhergehenden Ansprüche, ***dadurch gekennzeichnet, daß*** nach teilweisem Befüllen der Spritzgießform (2) mit dem ersten. Material mittels eines Schiebers ein weiterer Bereich der Spritzgießform geöffnet wird, der anschließend mit dem zweiten Material gefüllt wird.

10. Verfahren nach einem der vorhergehenden Ansprüche, ***dadurch gekennzeichnet, daß*** vor dem ersten plastifizierbaren Material mindestens ein weiteres plastifizierbares Material eingespritzt wird.

11. Verfahren nach einem der vorhergehenden Ansprüche, ***dadurch gekennzeichnet, dass*** die Spritzgießform (2) mit einer niedrig schmelzenden Metalllegierung temperiert wird.

12. Justierdüse für eine Spritzgußvorrichtung, ***gekennzeichnet* durch** zwei miteinander verbundene Ausgänge (20'), die jeweils mit einem Rückschlagventil (25, 25'; 26, 26') versehen sind, wobei die Rückschlagventile (25, 25'; 26, 26') gegenläufig angeordnet sind.

13. Justierdüse für eine Spritzgußvorrichtung nach Anspruch 12, ***dadurch gekennzeichnet, dass*** die Justierdüse (20) an einer Fläche (24) anliegt und mit einem Flansch (21) befestigt ist.

14. Justierdüse für eine Spritzgußvorrichtung, ***dadurch gekennzeichnet, dass*** die Justierdüse (31) verschiedene Kanäle (34, 35) aufweist und in einem Block (30) beweglich geführt ist, so dass ein Kanal (34, 35) der Justierdüse (31) mit einem Kanal (32) im Block (30) fluchtet.

15. Justierdüse nach Anspruch 14, ***dadurch gekennzeichnet, dass*** in der Justierdüse (31) ein L-förmiger Kanal (35) vorgesehen ist, der mit einem Nebenextruder verbunden ist.

16. Justierdüse nach Anspruch 14 oder 15, ***dadurch gekennzeichnet, dass*** der Kanal (32) im Block (30) mit einem Hauptextruder verbunden ist.

17. Justierdüse nach einem der Ansprüche 14 bis 16, ***dadurch gekennzeichnet, dass*** der Kanal (32) im Block (30) mit einem Formnest (3) in Verbindung steht.

## Claims

1. A method for injection moulding injection moulded parts from material that can be plasticized, wherein a first plasticized material is injected into an injection mould (2) through a first opening (4, 5) and solidifies on the edge of the mould, and wherein a second plasticized material that differs from the first plasticized material is subsequently injected into the injection mould (2), **characterized by** the fact that only the second plasticized material is moved during the solidification process in such a way that it overflows through a second opening (5, 4).

2. The method according to Claim 1, **characterized by** the fact that the second plasticized material is only moved in one direction.

3. The method according to one of the preceding claims, **characterized by** the fact that the movement is generated by means of ultrasound.

4. The method according to one of the preceding claims, **characterized by** the fact that an electromagnetic field acts upon the second plasticized material.

5. The method according to one of the preceding claims, **characterized by** the fact that the movement is generated by a pump (13) for the molten mass.

6. The method according to one of the preceding claims, **characterized by** the fact that the second plasticized material is at least partially injected into the injection mould (2) simultaneously from two points (4, 5).

7. The method according to one of the preceding claims, **characterized by** the fact that a film or a reinforcing fabric is placed into the injection mould (2) before or after injecting the plasticized material.

8. The method according to one of the preceding claims, **characterized by** the fact that the first material only covers part of the wall of the injection mould (2).

9. The method according to one of the preceding claims, **characterized by** the fact that, after partially filling the injection mould (2) with the first material, a slide opens another region of the injection mould which is subsequently filled with the second material.

10. The method according to one of the preceding claims, **characterized by** the fact that at least one other material that can be plasticized is injected before the first plasticized material.

11. The method according to one of the preceding claims, **characterized by** the fact that the injection mould (2) is tempered with a metal alloy that has a low melting point.

12. An adjusting nozzle for an injection moulding device, **characterized by** two outlets (20') that are connected to one another and respectively provided with a return valve (25, 25'; 26, 26'), wherein the return valves (25, 25'; 26, 26') are arranged such that they act in opposite directions.

13. The adjusting nozzle for an injection moulding device according to Claim 12, **characterized by** the fact that the adjusting nozzle (20) adjoins a surface (24) and is mounted by means of a flange (21).

14. An adjusting nozzle for an injection moulding device, **characterized by** the fact that the adjusting nozzle (31) contains different channels (34, 35) and is movably guided in a block (30) in such a way that one channel (34, 35) of the adjusting nozzle (31) is aligned with a channel (32) in the block (30).

15. The adjusting nozzle according to Claim 14, **characterized by** the fact that the adjusting nozzle (31) contains a L-shaped channel (35) that is connected to a secondary extruder.

16. The adjusting nozzle according to Claim 14 or 15, **characterized by** the fact that the channel (32) in the block (30) is connected to a primary extruder.

17. The adjusting nozzle according to one of Claims 14 - 16, **characterized by** the fact that the channel (32) in the block (30) is connected to a mould cavity (3).

## Revendications

1. Procédé pour l'injection de pièces injectées en matière plastifiable, dans lequel une première matière plastifiée est injectée à travers un premier orifice (4, 5) dans un moule d'injection (2) et se solidifie sur le bord du moule et une deuxième matière plastifiée se distinguant de la première est ensuite injectée dans le moule d'injection (2), **caractérisé en ce que** seule la deuxième matière plastifiée est déplacée pendant la solidification de manière à se répandre à travers un deuxième orifice (5, 4).

2. Procédé selon la revendication 1, **caractérisé en ce que** la deuxième matière plastifiée n'est déplacée que dans un sens.

3. Procédé selon une des revendications précédentes, **caractérisé en ce que** le mouvement est obtenu par ultrason.

4. Procédé selon une des revendications précédentes, **caractérisé en ce qu'**un champ électromagnétique agit sur la deuxième matière plastifiée.

5. Procédé selon une des revendications précédentes, **caractérisé en ce que** le mouvement est obtenu par une pompe de coulée (13).

6. Procédé selon une des revendications précédentes, **caractérisé en ce que** la deuxième matière plastifiée est injectée à partir de deux endroits (4, 5) au moins en partie simultanément dans le moule d'injection (2).

7. Procédé selon une des revendications précédentes, **caractérisé en ce que**, avant ou après l'injection de la matière plastifiée, un film ou une toile de renfort est déposé dans le moule d'injection (2).

8. Procédé selon une des revendications précédentes, **caractérisé en ce que** la première matière ne recouvre qu'une partie de la paroi du moule d'injection (2).

9. Procédé selon une des revendications précédentes, **caractérisé en ce qu'**après le remplissage partiel du moule d'injection (2) avec la première matière, une autre zone du moule d'injection, qui est ensuite remplie avec la deuxième matière, est ouverte au moyen d'un tiroir.

10. Procédé selon une des revendications précédentes, **caractérisé en ce qu'**avant la première matière plastifiable, au moins une autre matière plastifiable est injectée.

11. Procédé selon une des revendications précédentes, **caractérisé en ce que** le moule d'injection (2) est tempéré avec un alliage métallique à base fusion.

12. Buse d'ajustage pour dispositif d'injection, **caractérisée par** deux sorties reliées l'une à l'autre (20') qui sont respectivement munies d'une soupape anti-retour (25, 25' ; 26, 26'), les soupapes anti-retour (25, 25' ; 26, 26') étant disposées en sens inverse.

13. Buse d'ajustage pour dispositif d'injection selon la revendication 12, **caractérisée en ce que** la buse d'ajustage (20) repose sur une surface (24) et est fixée par une bride (21).

14. Buse d'ajustage pour dispositif d'injection, **caractérisée en ce que** la buse d'ajustage (31) présente différents canaux (34, 35) et est introduite de façon mobile dans un bloc (30), de manière à ce qu'un canal (34, 35) de la buse d'ajustage (31) soit aligné avec un canal (32) dans le bloc (30).

15. Buse d'ajustage selon la revendication 14, **caractérisée en ce que**, dans la buse d'ajustage (31), un canal en forme de L (35), qui est relié à une extrudeuse annexe, est prévu.

16. Buse d'ajustage selon la revendication 14 ou 15, **caractérisée en ce que** le canal (32) est relié dans le bloc (30) à une extrudeuse principale.

17. Buse d'ajustage selon une des revendications 14 à 16, **caractérisée en ce que** le canal (32) est en liaison dans le bloc (30) avec une poche de moulage (3).
